# EUROPÄISCHE PATENTSCHRIFT

(11) **EP 0 679 653 B1**
(45) Veröffentlichungstag und Bekanntmachung des Hinweises auf die Patenterteilung: **30.06.1999**
(21) Anmeldenummer: 95105714.0
(22) Anmeldetag: 15.04.1995
(51) Int. Cl.: C07F 7/08, C08G 77/38, C08G 77/392

(54) **Organosilyl- bzw. Organosiloxanyl-Derivate von Glycerinethern und deren Verwendung**
Organosilyl- or organosiloxanyl derivatives of glycerine ethers and their use
Dérivés organosilicique ou organosiloxanilique des éthers de glycérine et leur application

(30) Priorität: 27.04.1994 DE 4415556
(43) Veröffentlichungstag der Anmeldung: 02.11.1995
(73) Patentinhaber: Th. Goldschmidt AG, 45127 Essen (DE)
(72) Erfinder: Klein, Klaus-Dieter, Dr., D-45468 Mülheim (DE); Knott, Wilfried, Dr., D-45141 Essen (DE)

(56) Entgegenhaltungen:
- EP-A- 0 538 868

## Beschreibung

Die Erfindung betrifft neuartige Organosilyl- bzw. Organosiloxanyl-Derivate von Glycerinethern der allgemeinen Formel 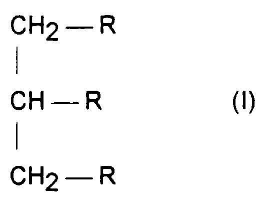 wobei
- R: -OH oder
der Rest -OCH₂ - CH = CH - (CH₂)₃-CH=CH₂ oder
der Rest (R⁵)ₐ -R⁶ oder
der Rest -OCH₂ - CH = CH - (CH₂)₅ - R⁴ ist,
mit der Maßgabe, daß mindestens einer der Reste R die letztgenannte Bedeutung hat, wobei
- R⁴: ein Silylrest der Formel -SiR¹R²R³, wobei R¹, R² und R³ gleiche oder verschiedene aliphatische oder aromatische Kohlenwasserstoffreste sind, oder
ein kettenförmiger oder verzweigter Organosiloxanylrest mit 2 bis 200 Siliciumatomen ist,
- R⁵: ein Rest der Formel -O(CH₂)_{b}- oder ein Polyetherrest der Formel -(OCₙH₂ₙ)_{c}- ist, wobei b einen Wert von 1 bis 11, n einen mittleren Wert von 2 bis 2,5 und c einen Wert von 1 bis 21 hat,
- R⁶: ein Rest -OSO₃X oder ein Rest -OR⁷ ist, wobei X ein Wasserstoff-, Alkali oder ein gegebenenfalls substituiertes Ammoniumion und R⁷ ein Wasserstoffrest, ein Alkylrest mit 1 bis 4 Kohlenstoffatomen oder ein Acetylrest ist,
- a: 0 oder 1 ist, wobei im Falle, daß R⁶ der Rest -OR⁷ ist, a=1 ist.

Bevorzugt sind dabei R^{1,} R² und R³ bzw. die organischen Reste des Polysiloxans Alkylreste mit 1 bis 4 Kohlenstoffatomen, wobei einer dieser Reste durch einen Phenylrest ersetzt sein kann. Besonders bevorzugt sind Verbindungen, bei denen mindestens 90 % der Reste R^{1,} R² und R³ bzw. die organischen Reste des Polysiloxans Methylreste sind.

Die erfindungsgemäßen Organosilyl- bzw. Organosiloxanyl-Derivate sind leicht zugänglich über Glycerinoctadienylether, die durch Telomerisation von Butadien mit Glycerin erhalten werden (Gruber et. al., "Chemie und Eigenschaften von Glycerinethersulfaten", Tenside Surf. Det. 30 (1993) 6).

Sie können in einfacher Weise hergestellt werden, indem man
Silane der allgemeinen Formel 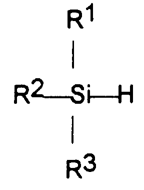 oder H-Siloxane
an Glycerinoctadienylether der allgemeinen Formel 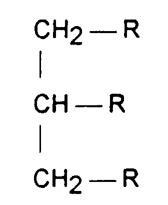 wobei R -OH oder der Rest -OCH₂ - CH = CH - (CH₂)₃-CH=CH₂ ist, in Gegenwart eines an sich bekannten Hydrosilylierungskatalysators anlagert.

Im Falle des Triethers als Ausgangsverbindung gelangt man so zu den Verbindungen der allgemeinen Formeln 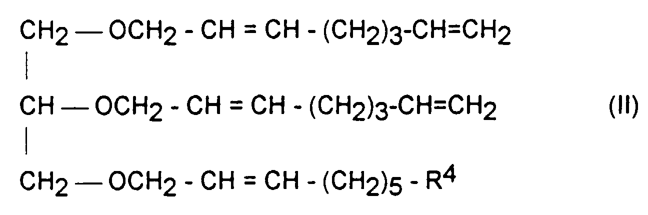 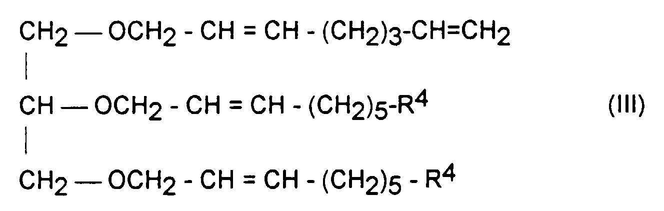 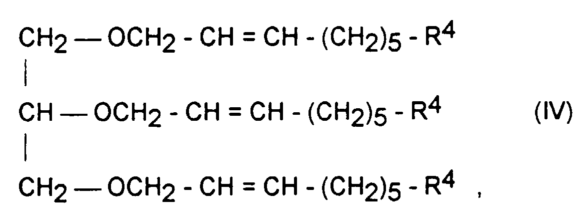 bzw. deren Stellungsisomeren,
wobei R⁴ die oben angegebene Bedeutung hat.

Diese können, insbesondere in der einfach silylierten bzw. siloxylierten Form (Formel II), als Modifikationsmittel für härtbare Harze, wie etwa Organopolysiloxanacrylate, Verwendung finden, da diese neuartige Substanzklasse die Eigenschaften reiner Organosiliciumverbindungen mit denjenigen reiner Kohlenwasserstoffgerüste in vorteilhafter Weise vereint.

Insbesondere im Hinblick auf die Verwendung in Polymerzubereitungen, bestehend aus zwei oder mehreren verschiedenartigen Polymeren, wirken diese Modifikationsmittel im Sinne von Compatibilizern.

Im Falle des Mono- bzw. Diethers als Ausgangsverbindung erhält man die Verbindungen der allgemeinen Formel 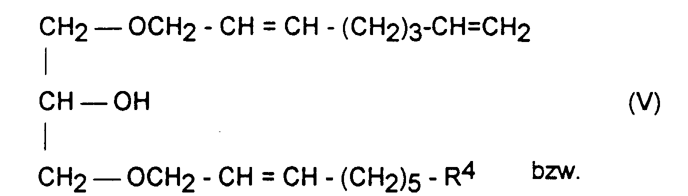 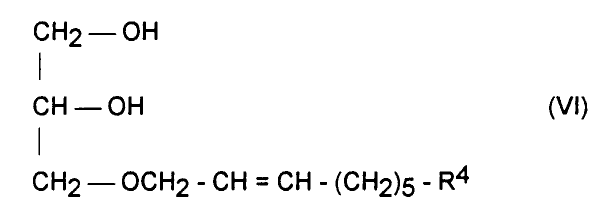 bzw. deren Stellungsisomere.

Verbindungen der Formel V können über die vorhandene Doppelbindung ebenfalls zur Modifikation der Eigenschaften von härtbaren Harzen verwendet werden.

Des weiteren gestattet die olefinische Doppelbindung die Einbringung dieser Substanzklasse in Standardreaktionen der organischen Chemie wie beispielsweise der Sulfonatisierung, der Epoxydierung, der Metathese, der Bromierung, der Überführung in Bunte-Salze, etc.

In der europaïschen Patentanmeldung EP-A-0 538 868 werden weitere Organosilicium Verbindungen als Edukte für die Darstellung von Bunte-Salz-Derivaten offenbart.

Aufgrund der OH-Gruppen können beide Verbindungsgruppen auch als Mono- bzw. Diolkomponente zur Modifikation von Polyester- bzw. Polyurethanharzen eingesetzt werden.

Die Verbindungen der Formeln V und VI sind insbesondere geeignet zur weiteren Umsetzung zu tensidischen Verbindungen der allgemeinen Formeln 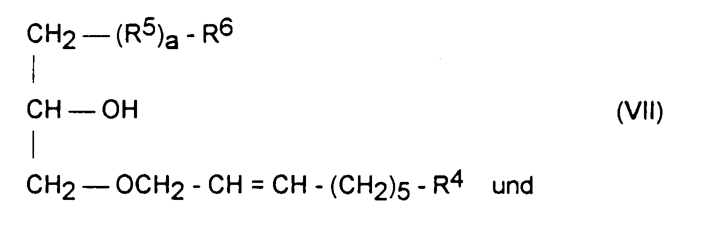 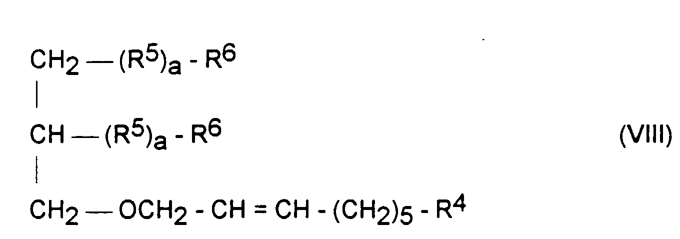 wobei R⁵ und R⁶ die oben angegebene Bedeutung haben.

Dabei sollte der Rest -(R⁵)ₐ - R⁶ so ausgewählt werden, daß die resultierenden Verbindungen eine hohe Verträglichkeit gegenüber dem Zielmedium besitzen, in anderen Worten durch geeignete Einstellung des HLB-Wertes angepaßt sind. So wird man für wäßrige Medien einen HLB-Wert von >5 durch entsprechenden Einbau hydrophiler Gruppen einstellen.

Vorzugsweise ist R⁵ ein Polyetherrest der Formel -(OCₙH₂ₙ)_{c}- , wobei n vorzugsweise einen Wert von 2,0 hat, so daß in diesem Falle alle Oxyalkylen-Einheiten als Oxyethylen-Einheiten vorliegen. Der Index c ist vorzugsweise 3 bis 6.

Die Verbindungen der Formeln VII und VIII können in an sich bekannter Weise hergestellt werden, indem man die Verbindungen der Formeln VI und VII verethert bzw. alkoxyliert bzw. die am Glycidylrest direkt gebundene Hydroxylgruppe sulfoniert bzw. sulfatiert. Die aus der Veretherung bzw. Alkoxylierung hervorgehenden OH-funktionellen Polyether sind einer nachfolgenden Sulfatierung zugänglich, wobei der hierbei angeknüpfte Rest -OSO₃X umfaßt, wobei X ein Wasserstoff-, Alkali oder ein gegebenenfalls substituiertes Ammoniumion ist.

Beispiele für die erfindungsgemäßen Organosilyl- bzw. Organosiloxanyl-Derivate von Glycerinethern mit tensidischem Charakter sind

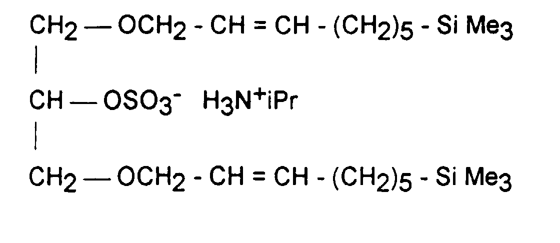

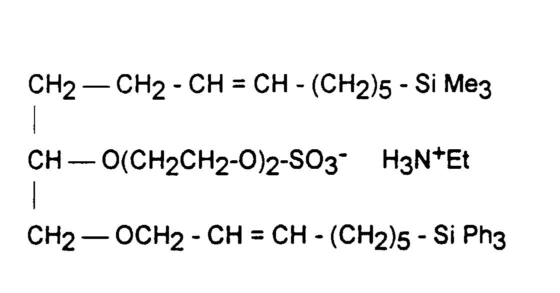

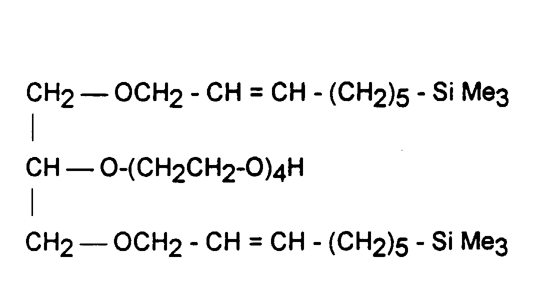

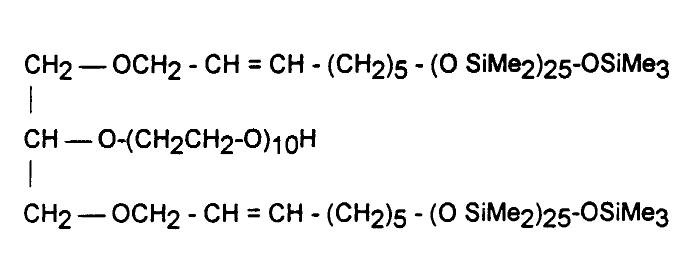

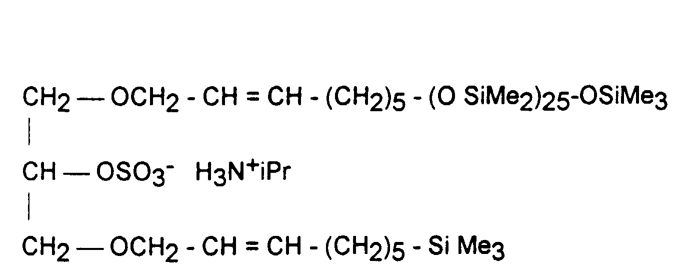

Ein weiterer Gegenstand der Erfindung ist die Verwendung der Verbindungen der allgemeinen Formeln VII und VIII als Tenside in wäßrigen Medien. Wichtige Einsatzmöglichkeiten sind u. a.:
- als Netzmittel:
   in Zubereitungen zur Behandlung von Pflanzen (Agroformulierungen); zur Verbesserung der Benetzung niederenergetischer Substrate, wie etwa Polyethylen-, Polypropylenoberflächen; für die Anwendung in der Lackindustrie; bei der Herstellung photografischer Filme; in der Galvanotechnik;
- als Dispergiermittel:
   für Dispersionsfarbstoffe, Pigmente und Füllstoffe;
- als Emulgiermittel oder Zusatzstoffe in der Textilindustrie zur Herstellung von Textilhilfsmitteln, Avivagen, Gleitmitteln, antistatischen Zubereitungen; als Färbereihilfsmittel;
- als Tenside allgemein:
   zur Verwendung in Feuerlöschmitteln; als Schaumstabilisatoren; als grenzflächenaktive Zusätze für Schnelldrucktinten, Klebstoffe, Dispersionsklebstoffe, Schmelzkleber; Verwendung in Waschmitteln; als Zusatzstoffe für technische Reiniger;
- als Rohstoffe für die Verwendung in der Kosmetik, z.B. in Pflegemitteln, Shampoos, Duschbädern;
- in technischen Anwendungen und im Haushalt:
   als Antibeschlagmittel; zur Verwendung in Geschirrspülmitteln, Waschmitteln, WC-Reinigern, Selbstglanzemulsionen.

Hierbei gewährt der Einbau von Organosilan, speziell Trimethylsilanresten, gegenüber Strukturen mit immanenter Siloxansubstitution am Glyceringerüst eine Option zur Erzielung biologisch abbaubarer Tenside.

### Beispiel 1

### Anlagerung von Trimethylsilan an Glycerimonooctadienylether

In einen 300-ml-Laborautoklaven werden 35,0 g (0,175 mol) Glycerinmonooctadienylether, 0,5 g Natriumcarbonat und 3 mg cis-(Diamino)dichlorplatin eingewogen. Der Autoklav wird nun samt Inhalt unter Argon-Schutzgasbedampfung in einem Aceton/Trockeneisbad gekühlt und 13,6 g (0,184 mol) Trimethylsilan (Kp.=6.7°C) werden aus kondensierter Phase übergehebert. Der Autoklav wird verschlossen und auf 130°C geheizt. Dabei steigt der Innendruck bis auf 12,3 bar an, um dann auf ca. 4,5 bar wieder abzufallen, was eine Reaktion signalisiert.

Nach der Entspannung des Autoklaven, die nach dem Abkühlen auf Raumtemperatur erfolgt, wird der Inhalt (Auswaage: 46,5 g, Masseverlust: 1,5 g) durch Filtration vom Platinkatalysator befreit.

Hydroxylzahl: Theorie 409 Praxis 385
Die ²⁹Si-NMR- und ¹H-NMR-spektroskopische Analyse ergibt folgende Produktstruktur:

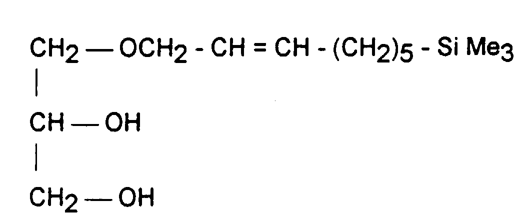

Das Produkt wird im Ölpumpenvakuum bei 50°C von niederflüchtigen Bestandteilen befreit und dann ohne weitere Aufarbeitung zur Ethoxylierung eingesetzt.

### Beispiel 2

### Verwendung des in Beispiel 1 gewonnen Anlagerungsproduktes zur Ethoxylierung

In einem Dreihalskolben, der mit einem Intensivkühler, Thermometer, Kühlmanteltropftrichter sowie einem Stickstoffanschluß ausgerüstet ist, werden 40g (0,145 mol) Anlagerungsprodukt aus Beispiel 1 und 1 g einer 50 %igen Bortrifluorid-Etherat-Lösung vorgelegt. Dann werden 56,5 g (1,28 mol) einkondensierten Ethylenoxids langsam zugetropft. Der exothermen Reaktion wird mit einem Eisbad entgegengewirkt, so daß die Innentemperatur 20-30°C nicht überschreitet. Danach wird noch zwei Stunden bei Raumtemperatur nachgerührt und nach Neutralisation mit 2 g Natriumhydrogencarbonat und 1 g Wasser (1 Gew.-%) werden die flüchtigen Bestandteile im Wasserstrahlvakuum bei 90°C aus dem Produkt entfernt.

Die anschließende Filtration unter vorheriger Zugabe von Filterhilfe "Celite J 10" ergibt ein schwach gelb gefärbtes, klares Produkt, das gemäß ¹H-NMR-Spektroskopie sowie der GPC pro Kette 4 Oxyalkylen-Einheiten aufweist und demnach in folgender mittlerer Formel wiedergegeben werden kann:

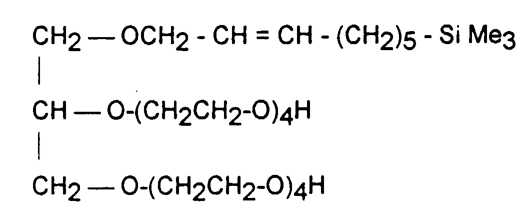

### Beispiel 3

### Herstellung des Anlagerungsproduktes aus Glycerindioctadienylether und zwei Äquivalenten Heptamethyltrisiloxan

In einem 500-ml-Vierhalsrundkolben mit KPG-Rührer und Rückflußkühler werden 70 g (0,23 mol) Glycerindioctadienylether zusammen mit 10 mg cis-Diaminoplatindichlorid unter Rühren vorgelegt und auf 100°C erwärmt.
102 g (0,46 mol) Heptamethyltrisiloxan werden sukzessive zugetropft. Nach beendeter Zugabe (ca. 1 h) wird für weitere 2 h bei 120°C nachgerührt. Nach Abkühlen des Reaktionsansatzes wird über eine Filterpresse der Katalysator entfernt.

Erhalten werden 165 g eines leichtbeweglichen, farblosen Öls, dessen Struktur durch ¹H-NMR-Spektroskopie wie folgt charakterisiert wurde:

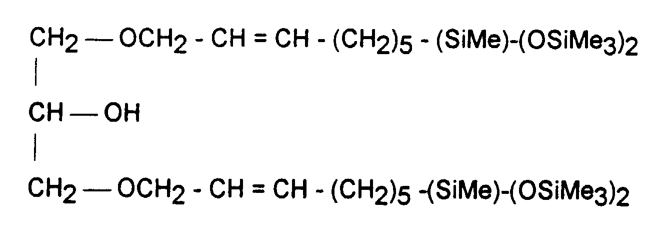

### Beispiel 4

### Verwendung des in Beispiel 3 gewonnenen Produktes zur Herstellung seines Isopropylammoniumsulfato-Derivates

In einem 500-ml-Vierhalskolben, ausgestattet mit Rührer, Rückflußkühler, Thermometer und Tropftrichter, werden 150 g (0,20 mol) des Anlagerungsproduktes aus Beispiel 3, 20,4 g (0,21 mol) frisch gemörserte Amidoschwefelsäure und 20 g Dimethylformamid unter Stickstoffbedampfung gemischt und 4 Stunden auf 85°C Innentemperatur erhitzt. Die Reaktionsmischung wird danach bei Raumtemperatur mit 14,2 g (0,24 mol) i-Propylamin versetzt, wobei sich die Mischung erwärmt und Ammoniakgas entweicht. Dadurch werden gleichzeitig im Produkt vorhandene Säurereste neutralisiert. Danach wird filtriert und das Produkt bei 85°C im Ölpumpenvakuum von N,N-Dimethylformamid und überschüssigem Isopropylamin befreit.

Erhalten werden 174 g eines hochviskosen, gelblichen Öls.

Das Integrationsverhältnis im ¹H-NMR-Spektrum belegt einen Sulfatierungsgrad von 85 % und weist dem Produkt folgende Struktur zu:

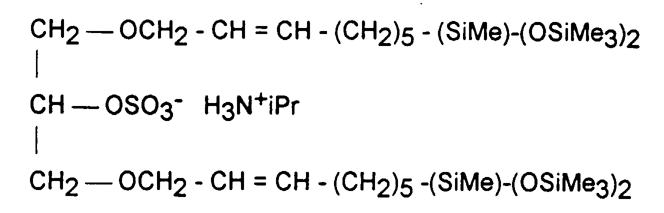

## Patentansprüche

1. Organosilyl- bzw. Organosiloxanyl-Derivate von Glycerinethern der allgemeinen Formel 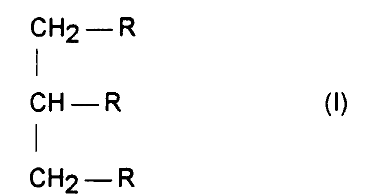 wobei
R -OH oder
der Rest -OCH₂- CH = CH - (CH₂)₃-CH=CH₂ oder
der Rest -(R⁵)ₐ-R⁶ oder
der Rest -OCH₂- CH = CH - (CH₂)₅ - R⁴ ist,
mit der Maßgabe, daß mindestens einer der Reste R die letztgenannte Bedeutung hat, wobei
R⁴ ein Silylrest der Formel -SiR¹ R²R³, wobei R¹, R² und R³ gleiche oder verschiedene aliphatische oder aromatische Kohlenwasserstoffreste sind, oder
ein kettenförmiger oder verzweigter Organosiloxanylrest mit 2 bis 200 Siliciumatomen ist,
R⁵ ein Rest der Formel -O(CH₂)_{b}- oder ein Polyetherrest der Formel -(OCₙH₂ₙ)_{c-} ist, wobei b einen Wert von 1 bis 11, n einen mittleren Wert von 2 bis 2,5 und c einen Wert von 1 bis 21 hat,
R⁶ ein Rest -OSO₃X oder ein Rest -OR⁷ ist, wobei X ein Wasserstoff-, Alkali oder ein gegebenenfalls substituiertes Ammoniumion und R⁷ ein Wasserstoffrest, ein Alkylrest mit 1 bis 4 Kohlenstoffatomen oder ein Acetylrest ist,
a 0 oder 1 ist, wobei im Falle, daß R⁶ der Rest -OR⁷ ist, a = 1 ist.

2. Organosilyl- bzw. Organosiloxanyl-Derivate von Glycerinethern gemäß Anspruch 1, dadurch gekennzeichnet, daß R¹, R² und R³ bzw. die organischen Reste des Polysiloxans Alkylreste mit 1 bis 4 Kohlenstoffatomen sind, wobei einer dieser Reste durch einen Phenylrest ersetzt sein kann.

3. Organosilyl- bzw. Organosiloxanyl-Derivate von Glycerinethern gemäß Anspruch 2, dadurch gekennzeichnet, daß mindestens 90 % der Reste R¹, R² und R³ bzw. die organischen Reste des Polysiloxans Methylreste sind.

4. Organosilyl- bzw. Organosiloxanyl-Derivate von Glycerinethern gemäß einem oder mehreren der vorhergehenden Ansprüche, dadurch gekennzeichnet, daß einer oder zwei der Reste R den Rest -(R⁵)ₐ- R⁶ bedeuten.

5. Organosilyl- bzw. Organosiloxanyl-Derivate von Glycerinethern gemäß Anspruch 4, dadurch gekennzeichnet, daß der Rest R⁵ ein Polyetherrest ist, bei welchem n einen Wert von 2 und c einen Wert von 3 bis 6 hat.

6. Organosilyl- bzw. Organosiloxanyl-Derivate von Glycerinethern gemäß den Ansprüchen 4 und 5, dadurch gekennzeichnet, daß X ein Alkylammoniumrest ist, dessen Alkylrest(e) 1 bis 10 Kohlenstoffatome aufweist (aufweisen).

7. Organosilyl- bzw. Organosiloxanyl-Derivate von Glycerinethern gemäß den Ansprüchen 1 bis 3, dadurch gekennzeichnet, daß zwei der Reste R den Rest -OCH₂ - CH = CH - (CH₂)₃-CH=CH₂ bedeuten.

8. Verwendung der Organosilyl- bzw. Organosiloxanyl-Derivate von Glycerinethern gemäß den Ansprüchen 4 bis 7 als Tenside in wäßrigen Medien.

## Claims

1. Organosilyl or organosiloxanyl derivatives of glycerol ethers of the general formula 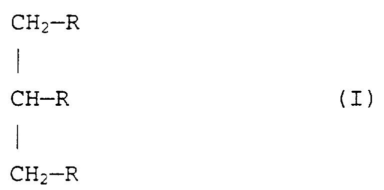 where
R is -OH or
the radical -OCH₂-CH=CH-(CH₂)₃-CH=CH₂ or
the radical -(R⁵)ₐ-R⁶ or
the radical -OCH₂-CH=CH-(CH₂)₅-R⁴,
with the proviso that at least one of the radicals R has the last-mentioned meaning,
where
R⁴ is a silyl radical of the formula -SiR¹R²R³, where R¹, R² and R³ are identical or different aliphatic or aromatic hydrocarbon radicals, or
a chain or branched organosiloxanyl radical having from 2 to 200 silicon atoms,
R⁵ is a radical of the formula -O(CH₂)_{b}- or a polyether radical of the formula -(OCₙH₂ₙ)_{c}-, where b has a value of from 1 to 11, n has an average value of from 2 to 2.5 and c has a value of from 1 to 21,
R⁶ is a radical -OSO₃X or a radical -OR⁷, where X is a hydrogen ion, alkali metal or an optionally substituted ammonium ion and R⁷ is a hydrogen radical, an alkyl radical having from 1 to 4 carbon atoms or an acetyl radical, and
a is 0 or 1, and when R⁶ is the radical -OR⁷, a = 1.

2. Organosilyl or organosiloxanyl derivatives of glycerol ethers according to Claim 1, characterized in that R¹, R² and R³ or the organic radicals of the polysiloxane are alkyl radicals having from 1 to 4 carbon atoms, it being possible for one of these radicals to be replaced by a phenyl radical.

3. Organosilyl or organosiloxanyl derivatives of glycerol ethers according to Claim 2, characterized in that at least 90% of the radicals R¹, R² and R³ or the organic radicals of the polysiloxane are methyl radicals.

4. Organosilyl or organosiloxanyl derivatives of glycerol ethers according to one or more of the preceding claims, characterized in that one or two of the radicals R are the radical-(R⁵)ₐ-R⁶.

5. Organosilyl or organosiloxanyl derivatives of glycerol ethers according to Claim 4, characterized in that the radical R⁵ is a polyether radical in which n has a value of 2 and c has a value of from 3 to 6.

6. Organosilyl or organosiloxanyl derivatives of glycerol ethers according to Claims 4 and 5, characterized in that X is an alkyl ammonium radical whose alkyl radical(s) has (have) from 1 to 10 carbon atoms.

7. Organosilyl or organosiloxanyl derivatives of glycerol ethers according to Claims 1 to 3, characterized in that two of the radicals R are the radical -OCH₂-CH=CH-(CH₂)₃-CH=CH₂.

8. Use of the organosilyl or organosiloxanyl derivatives of glycerol ethers according to Claims 4 to 7 as surfactants in aqueous media.

## Revendications

1. Dérivés organosilylés ou selon le cas organosiloxanylés d'éthers de glycérol de formule générale : 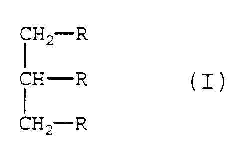 dans laquelle
R est -OH, ou
le radical -OCH₂-CH=CH-(CH₂)₃-CH=CH₂, ou
le radical -(R⁵)ₐ-R⁶, ou
le radical -OCH₂-CH=CH-(CH₂)₅-R⁴,
étant entendu qu'au moins un des radicaux R a la dernière signification,
R⁴ étant un radical silyle de formule -SiR¹R²R³, dans laquelle R¹, R² et R³ sont des radicaux hydrocarbonés aliphatiques ou aromatiques identiques ou différents, ou
un radical organosiloxanylé en chaîne ou ramifié avec 2 à 200 atomes de silicium;
R⁵ étant un radical de formule -O(CH₂)_{b}- ou un radical polyéther de formule -(OCₙH₂ₙ)_{c}-, dans lequeles b vaut de 1 à 11, n vaut en moyenne de 2 à 2,5 et c vaut de 1 à 21;
R⁶ étant un radical -OSO₃X ou un radical -OR⁷, dans lequel X est un ion hydrogène, alcalin ou ammonium facultativement substitué et R⁷ est un radical hydrogène, un radical alkyle avec 1 à 4 atomes de carbone ou un radical acétyle,
a est 0 ou 1, a étant égal à 1 dans le cas où R⁶ est le radical -OR⁷.

2. Dérivés organosilylés ou selon le cas organosiloxanylés d'éthers de glycérol suivant la revendication 1, caractérisés en ce que R¹, R² et R³ ou selon le cas les radicaux organiques du polysiloxane sont des radicaux alkyle avec 1 à 4 atomes de carbone, l'un de ces radicaux pouvant être remplacé par un radical phényle.

3. Dérivés organosilylés ou selon le cas organosiloxanylés d'éthers de glycérol suivant la revendication 2, caractérisés en ce qu'au moins 90% des radicaux R¹, R² et R³ ou selon le cas des radicaux organiques du polysiloxane sont des radicaux méthyle.

4. Dérivés organosilylés ou selon le cas organosiloxanylés d'éthers de glycérol suivant une ou plusieurs des revendications précédentes, caractérisés en ce qu'un ou deux des radicaux R signifient le radical -(R⁵)ₐ-R⁶.

5. Dérivés organosilylés ou selon le cas organosiloxanylés d'éthers de glycérol suivant la revendication 4, caractérisés en ce que le radical R⁵ est un radical polyéther, dans lequel n vaut 2 et c vaut de 3 à 6.

6. Dérivés organosilylés ou selon le cas organosiloxanylés d'éthers de glycérol suivant les revendications 4 et 5, caractérisés en ce que X est un radical alkylammonium dont le (les) radical(ux) alkyle présente(nt) 1 à 10 atomes de carbone.

7. Dérivés organosilylés ou selon le cas organosiloxanylés d'éthers de glycérol suivant les revendications 1 à 3, caractérisés en ce que deux des radicaux R signifient le radical -OCH₂-CH=CH-(CH₂)₃-CH=CH₂.

8. Utilisation des dérivés organosilylés ou selon le cas organosiloxanylés d'éthers de glycérol suivant les revendications 4 à 7 comme surfactants dans des milieux aqueux.
